# EUROPEAN PATENT APPLICATION

(11) **EP 4 682 430 A1**
(43) Date of publication of application: **21.01.2026**
(21) Application number: 24914485.8
(22) Date of filing: 28.10.2024
(51) Int. Cl.: F24F 1/0003, F24F 11/88

(54) **AIR CONDITIONER**

(30) Priority: 31.05.2024 CN 202410703788
(71) Applicant: Hisense (Guangdong) Air Conditioning Co., Ltd., Jiangmen, Guangdong 529085 (CN)
(72) Inventor: ZHANG, Jianneng, Jiangmen, Guangdong 529085 (CN); ZHOU, Liang, Jiangmen, Guangdong 529085 (CN); LI, Xidong, Jiangmen, Guangdong 529085 (CN)
(74) Representative: Winter, Brandl - Partnerschaft mbB
(86) International application number: PCT/CN2024/127712
(87) International publication number: WO 2025/246164

(57) **Abstract**

An air conditioner includes an indoor unit and an outdoor unit. The indoor unit includes an indoor-unit main control circuit and an indoor-unit communication circuit. The outdoor unit includes an outdoor-unit main control circuit and an outdoor-unit communication circuit. A first part of the indoor-unit communication circuit and a first part of the outdoor-unit communication circuit constitute a first loop. The outdoor-unit main control circuit is capable of receiving a first signal transmitted by the first loop. A second part of the indoor-unit communication circuit and a second part of the outdoor-unit communication circuit constitute a second loop. The indoor-unit main control circuit is capable of receiving a second signal transmitted by the second loop.

## Description

This application claims the priority of the Chinese patent application No. 202410703788.6 filed on May 31, 2024, the entire content of which is incorporated herein by reference.

### TECHNICAL FIELD

The present disclosure relates to the field of air conditioning technology, more particularly to an air conditioner.

### BACKGROUND

With the advancement of science and technology, the application of electrical appliances has become increasingly widespread. Air conditioners have entered millions of households, and more and more people's daily lives are closely related to air conditioners. An air conditioner consists of an indoor unit and an outdoor unit. The indoor unit and outdoor unit can communicate with each other to achieve the functions of the air conditioner.

### SUMMARY

In a communication circuit of an air conditioner, a transmitting optocoupler and a receiving optocoupler are arranged in a series loop, so that when an indoor unit and an outdoor unit communicate with each other, an indoor controller and an outdoor controller must be highly coordinated and operate simultaneously; otherwise, communication will be difficult to achieve.

To solve the above problem, in an aspect, an air conditioner is provided. The air conditioner includes an indoor unit and an outdoor unit. The indoor unit includes an indoor-unit main control circuit and an indoor-unit communication circuit. The indoor-unit main control circuit is capable of controlling an operation of the indoor-unit communication circuit. A control end of the indoor-unit communication circuit is electrically connected to a signal transmitting end of the indoor-unit main control circuit. The outdoor unit includes an outdoor-unit main control circuit and the outdoor-unit communication circuit. The outdoor-unit main control circuit is capable of controlling an operation of the outdoor-unit communication circuit. A control end of the outdoor-unit communication circuit is electrically connected to a signal transmitting end of the outdoor-unit main control circuit, and the outdoor-unit communication circuit is electrically connected to the indoor-unit communication circuit.

A first part of the indoor-unit communication circuit and a first part of the outdoor-unit communication circuit constitute a first loop. The signal transmitting end of the indoor-unit main control circuit is capable of sending a first control signal. The first control signal is capable of controlling the first loop to be triggered in conduction during a positive half-cycle of an alternating current (AC) power. The outdoor-unit main control circuit is capable of receiving a first signal transmitted by the first loop. The first signal is capable of controlling an operation of the outdoor unit.

A second part of the indoor-unit communication circuit and a second part of the outdoor-unit communication circuit constitute a second loop. The signal transmitting end of the outdoor-unit main control circuit is capable of sending a second control signal. The second control signal is capable of controlling the second loop to be triggered in conduction during a negative half-cycle of the AC power. The indoor-unit main control circuit is capable of receiving a second signal transmitted by the second loop. The second signal is capable of controlling an operation of the indoor unit.

In this way, the indoor unit can send a signal to the outdoor unit at any time, and the process of the indoor unit sending the signal to the outdoor unit is solely controlled by the indoor-unit main control circuit, independent of the outdoor unit. Similarly, the outdoor unit can also send a signal to the indoor unit at any time, and the process of the outdoor unit sending the signal to the indoor unit is solely controlled by the outdoor-unit main control circuit, independent of the indoor unit. In this way, the indoor-to-outdoor communication and outdoor-to-indoor communication can be performed independently without affecting each other.

In another aspect, an air conditioner is provided. The air conditioner includes an indoor-unit main control circuit, an indoor-unit communication circuit, an outdoor-unit main control circuit and an outdoor-unit communication circuit. The indoor-unit main control circuit is capable of controlling an operation of the indoor-unit communication circuit. A control end of the indoor-unit communication circuit is electrically connected to a signal transmitting end of the indoor-unit main control circuit. The outdoor-unit main control circuit is capable of controlling an operation of the outdoor-unit communication circuit. A control end of the outdoor-unit communication circuit is electrically connected to a signal transmitting end of the outdoor-unit main control circuit, and the outdoor-unit communication circuit is electrically connected to the indoor-unit communication circuit.

A first part of the indoor-unit communication circuit and a first part of the outdoor-unit communication circuit constitute a first loop. The signal transmitting end of the indoor-unit main control circuit is capable of sending a first control signa. The first control signal is capable of controlling the first loop to be triggered in conduction during a positive half-cycle of the AC power. The outdoor-unit main control circuit is capable of receiving a first signal transmitted by the first loop. The first signal is capable of controlling an operation of the outdoor unit.

A second part of the indoor-unit communication circuit and a second part of the outdoor-unit communication circuit constitute a second loop. The signal transmitting end of the outdoor-unit main control circuit is capable of sending a second control signal. The second control signal is capable of controlling the second loop to be triggered in conduction during a negative half-cycle of the AC power. The indoor-unit main control circuit is capable of receiving a second signal transmitted by the second loop. The second signal is capable of controlling an operation of the indoor unit.

In this way, the indoor-unit communication circuit can send a signal to the outdoor-unit main control circuit at any time, and the process of the indoor-unit communication circuit sending the signal to the outdoor-unit main control circuit is solely controlled by the indoor-unit main control circuit, independent of the outdoor-unit main control circuit. Similarly, the outdoor-unit communication circuit can send a signal to the indoor-unit main control circuit at any time, and the process of the outdoor-unit communication circuit sending the signal to theindoor-unit main control circuit is solely controlled by the outdoor-unit main control circuit, independent of the indoor-unit main control circuit. In this way, the indoor-to-outdoor communication and outdoor-to-indoor communication can be performed independently without affecting each other.

### DESCRIPTION OF THE DRAWINGS

FIG. 1 is a schematic diagram of an air conditioner according to some embodiments;
FIG. 2 is a block diagram of an air conditioner according to some embodiments;
FIG. 3 is a block diagram of an indoor unit and a connector according to some embodiments;
FIG. 4 is a block diagram of another air conditioner according to some embodiments;
FIG. 5 is a block diagram of yet another air conditioner according to some embodiments;
FIG. 6 is a block diagram of yet another air conditioner according to some embodiments;
FIG. 7 is a circuit diagram of an indoor unit and an outdoor unit according to some embodiments;
FIG. 8 is another circuit diagram of an indoor unit and an outdoor unit according to some embodiments;
FIG. 9 is a circuit diagram of a power supply control circuit according to some embodiments;
FIG. 10 is another circuit diagram of an indoor unit and an outdoor unit according to some embodiments;
FIG. 11 is a circuit diagram of an indoor unit according to some embodiments;
FIG. 12 is a circuit diagram of an outdoor unit according to some embodiments;
FIG. 13 is another circuit diagram of an indoor unit and an outdoor unit according to some embodiments; and
FIG. 14 is a timing diagram of an operation of an air conditioner according to some embodiments.

### DETAILED DESCRIPTION OF THE EMBODIMENTS

The following will provide a clear and comprehensive description of some embodiments of the present disclosure in conjunction with the drawings. It is evident that the described embodiments are merely some not all embodiments of the present disclosure. All other embodiments obtained based on the embodiments of the present disclosure by a person of ordinary skill in the art shall be included in the protection scope of the present disclosure.

Unless the context requires otherwise, throughout the specification and claims, the term "comprise" and its other forms such as the third-person singular form "comprises" and the present participle form "comprising" are interpreted as open and inclusive in meaning, i.e., "including, but not limited to". In the description of the specification, the terms "one embodiment", "some embodiments", "exemplary embodiments", "example", "specific example" or "some examples" are intended to indicate that specific features, structures, materials or characteristics related to the embodiment or example are included in at least one embodiment or example of the present disclosure. The schematic representation of the above terms does not necessarily refer to the same embodiment or example. In addition, the specific features, structures, materials or characteristics described may be included in any one or more embodiments or examples in any appropriate manner.

Hereinafter, the terms "first" and "second" are used for descriptive purposes only and cannot be understood as indicating or implying relative importance or implicitly indicating the quantity of technical features indicated. Therefore, the features qualified with "first" and "second" may explicitly or implicitly include one or more such features. In the description of the embodiments of the present disclosure, unless otherwise specified, the term "a plurality of" means two or more.

When describing some embodiments, the expressions such as "being coupled to " and "being connected to" and the like may be used. The term "connection" should be understood in a broad sense. For example, "connection" may be a fixed connection, a detachable connection, or an integral connection. It may be a direct connection or an indirect connection through an intermediate medium. The term "coupled" indicates, for example, that two or more components are in direct physical or electrical contact. The term "coupled" or "communicatively coupled" may also refer to two or more components that are not in direct contact with each other, but still cooperate or interact with each other. The embodiments disclosed here are not necessarily limited to the contents of this article.

"At least one of A, B, and C" has the same meaning as "at least one of A, B, or C", and both include the following combinations of A, B, and C: A alone, B alone, C alone, the combination of A and B, the combination of A and C, the combination of B and C, and the combination of A, B, and C.

"A and/or B", includes the following three combinations: A alone, B alone, and the combination of A and B.

As used herein, the term "if" is optionally interpreted to mean "when..." or "upon..." or "in response to determining" or "in response to detecting", depending on the context. Similarly, the phrases "if it is determined..." or "if [the stated condition or event] is detected" are optionally interpreted to mean "when determining..." or "in response to determining..." or "when [the stated condition or event] is detected" or "in response to detecting [the stated condition or event]", depending on the context.

The use of "applicable to" or "configured to" in this article implies open and inclusive language, which does not exclude devices that are applicable to or configured to perform additional tasks or steps.

The term "about", "substantially" or "approximately" as used herein includes a stated value and an average value within an acceptable range of deviation of a particular value determined by a person of ordinary skill in the art, considering measurement in question and errors associated with measurement of a particular quantity (i.e., limitations of a measurement system).

Typically, an air conditioner includes a communication circuit to enable communication between an indoor unit and an outdoor unit. However, all transmitting optocouplers and receiving optocouplers in the communication circuit are arranged in a series loop. Thus, when the indoor unit and the outdoor unit communicate with each other, the indoor controller and the outdoor controller need to be highly coordinated and must operate simultaneously, otherwise it will be difficult to achieve communication. For example, when a communication instruction is sent by the indoor unit to the outdoor unit, the optocoupler in the outdoor unit that sends the communication instruction must be switched on, otherwise the loop will be disconnected. Similarly, when a communication instruction is sent by the outdoor unit to the indoor unit, the optocoupler in the indoor unit that sends the communication instruction must be switched on, this increases the complexity of communication between the indoor unit and the outdoor unit.

To solve the above problem, some embodiments of the present disclosure provide an air conditioner 1000. A first loop 5 and a second loop 6 are established in the air conditioner 1000 through an indoor-unit communication circuit 2 and an outdoor-unit communication circuit 4. The indoor unit 100 may send a first control signal to control the first loop 5 to be triggered in conduction in a positive half-cycle of an alternating current (AC) power, so that the outdoor unit 200 is powered on. The outdoor-unit main control circuit 1 may receive a first signal through the first loop 5 to control an operation of a relevant load of the outdoor unit 200. The outdoor unit 200 may send a second control signal to control the second loop 6 to be triggered in conduction in a negative half-cycle of the AC power, and the indoor-unit main control circuit 1 may receive a second signal through the second loop 6 to control an operation of a relevant load of the indoor unit 100.

In this way, the indoor unit 100 sending the first signal to the outdoor unit 200 and the outdoor unit 200 sending the second signal to the indoor unit 100 can be performed independently without affecting each other, which thus can reduce the complexity of communication between the indoor unit and the outdoor unit.

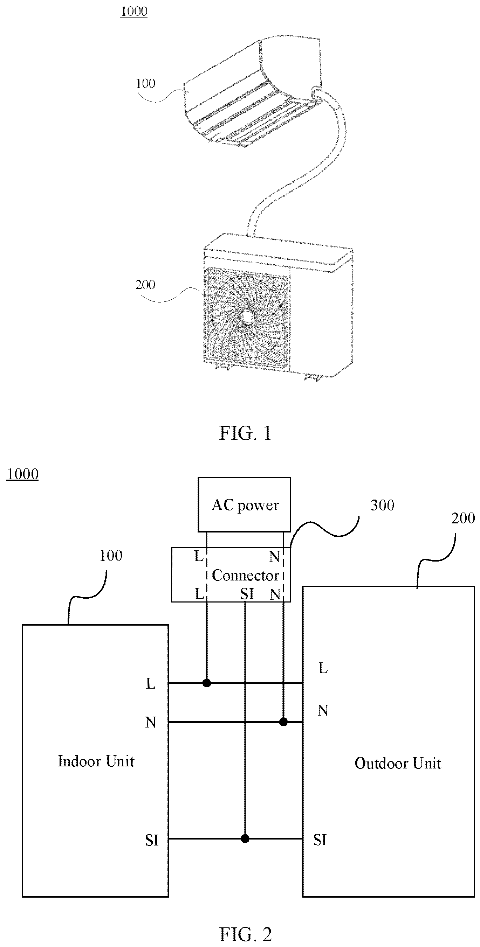

As shown in FIG. 1, the air conditioner 1000 includes an indoor unit 100. The indoor unit 100 may be arranged indoors. The air conditioner 1000 also includes an outdoor unit 200. The outdoor unit 200 may be arranged outdoors. The indoor unit 100 and the outdoor unit 200 work in coordination to achieve various functions of the air conditioner 1000. It should be noted that the air conditioner 1000 may be either split-type or integrated-type air conditioner.

As shown in FIG. 2, the air conditioner 1000 also includes a connector 300. An input end of the connector 300 is electrically connected to the AC power, and an output end of the connector 300 is electrically connected to the outdoor unit 200 and the indoor unit 100, thus enabling the connector 300 to supply power to the outdoor unit 200 and the indoor unit 100. Here, the AC power is generally the mains power, that is, 220V. The live wire of the AC power is electrically connected to a live wire input end of the connector 300, and the neutral wire of the AC power is electrically connected to a neutral wire input end of the connector 300.

It should be noted that FIG. 2 illustrates an example where the connector 300 is arranged outside the outdoor unit 200 and the indoor unit 100. In some embodiments, the connector 300 may also be arranged at other positions, for example, the connector 300 is arranged inside the outdoor unit 200, or the connector 300 is arranged inside the indoor unit 100.

In the above embodiment, the connector 300 being an integral part is taken as an example for illustration. In some embodiments, the connector 300 may be a split component. A first part of the connector 300 is arranged inside the indoor unit 100, and a second part of the connector 300 is arranged inside the outdoor unit 200.

As shown in FIG. 2, the connector 300 is provided with a live wire L, a neutral wire N and a communication wire SI. The indoor unit 100 is connected to the outdoor unit 200 through the live wire L, the neutral wire N and the communication wire SI.

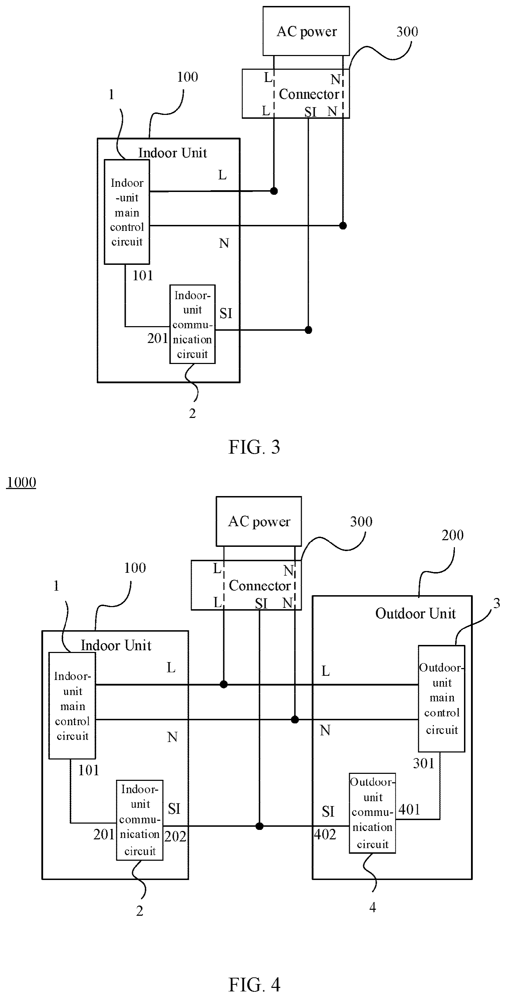

In some embodiments, as shown in FIG. 3, the indoor unit 100 includes an indoor-unit main control circuit 1. The indoor unit 100 also includes an indoor-unit communication circuit 2. A control end 201 of the indoor-unit communication circuit 2 is electrically connected to a signal transmitting end 101 of the indoor-unit main control circuit 1. The indoor-unit main control circuit 1 is configured to control an operation of the indoor-unit communication circuit 2.

In some embodiments, as shown in FIG. 4, the outdoor unit 200 includes an outdoor-unit main control circuit 3. The outdoor unit 200 also includes an outdoor-unit communication circuit 4. A control end 401 of the outdoor-unit communication circuit 4 is electrically connected to a signal transmitting end 301 of the outdoor-unit main control circuit 3. A first end 402 of the outdoor-unit communication circuit 4 is electrically connected to a first end 202 of the indoor-unit communication circuit 2. The outdoor-unit main control circuit 3 is configured to control an operation of the outdoor-unit communication circuit 4.

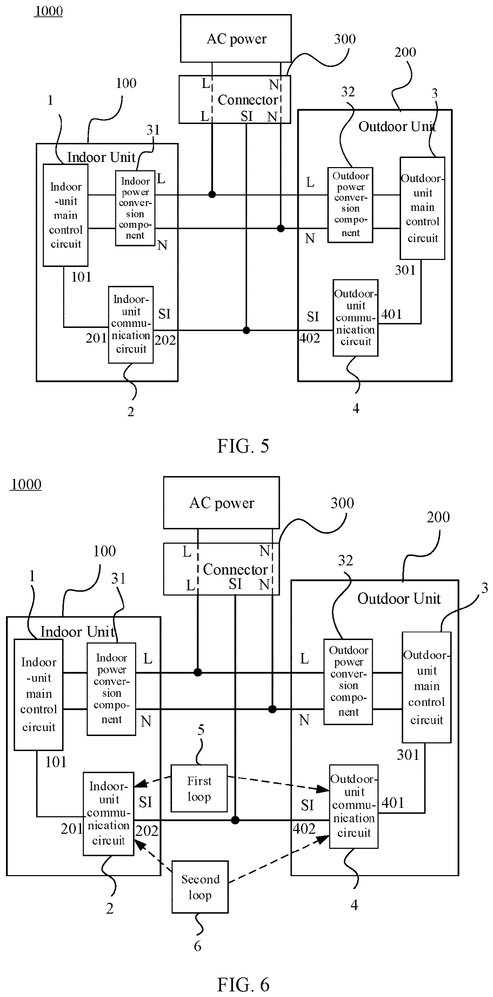

In some embodiments, as shown in FIG. 5, the indoor unit 100 also includes an indoor power conversion component 31. A first end of the indoor power conversion component 31 is electrically connected to the connector 300, and a second end of the indoor power conversion component 31 is electrically connected to the indoor-unit main control circuit 1. The indoor power conversion component 31 is configured to supply power to the indoor-unit main control circuit 1.

In some embodiments, as shown in FIG. 5, the outdoor unit 200 also includes an outdoor power conversion component 32. A first end of the outdoor power conversion component 32 is electrically connected to the connector 300, and a second end of the outdoor power conversion component 32 is electrically connected to the outdoor-unit main control circuit 3. The outdoor power conversion component 32 is configured to supply power to the outdoor-unit main control circuit 3.

As shown in FIG. 6, the first loop 5 is constituted by a first part of the indoor-unit communication circuit 2 and a first part of the outdoor-unit communication circuit 4. The second loop 6 is constituted by a second part of the indoor-unit communication circuit 2 and a second part of the outdoor-unit communication circuit 4.

It should be noted that the first loop 5 and the second loop 6 may include a same partial loop.

It can be understood that the indoor-unit communication circuit 2 is electrically connected to the outdoor-unit communication circuit 4, and circuits in the indoor-unit communication circuit 2 together with circuits in the outdoor-unit communication circuit 4 constitute the first loop 5 and the second loop 6.

The signal transmitting end 101 of the indoor-unit main control circuit 1 is configured to send a first control signal to control the first loop 5 to be triggered in conduction in the positive half-cycle of the AC power. For example, the first control signal is a continuous high-level signal to enable a conduction of the first loop 5.

The signal transmitting end 101 of the indoor-unit main control circuit 1 is also configured to: send a first signal after the first loop 5 is triggered in conduction, and the first signal transmitted through the triggered first loop 5 is received by the outdoor-unit main control circuit 3. The first signal is configured to control the operation of the outdoor unit 200. For example, the first signal may control an operation of a compressor, a fan, etc. in the outdoor unit 200.

The signal transmitting end 301 of the outdoor-unit main control circuit 3 is configured to send a second control signal to control the second loop 6 to be triggered in conduction in the negative half-cycle of the AC power. For example, the second control signal is a continuous high-level signal to enable of conduction of the second loop 6. The signal transmitting end 301 of the outdoor-unit main control circuit 3 is also configured to: send a second signal after the second loop 6 is triggered in conduction, and the second signal transmitted through the triggered second loop 6 can be received by the indoor-unit main control circuit 1. The second signal is configured to control the operation of the indoor unit 100.

It should be noted that the above description takes the first loop 5 being triggered in the positive half-cycle of the AC power and the second loop 6 being triggered in the negative half-cycle of the AC power as an example for illustration. Obviously, in some embodiments, the first loop 5 may be triggered in conduction in the negative half-cycle of the AC power and the second loop 6 may be triggered in conduction in the positive half-cycle of the AC power.

Since the first loop 5 and the second loop 6 are two separate circuit loops, either circuit loop can be triggered on under the control of the corresponding indoor-unit main control circuit 1 or outdoor-unit main control circuit 3.

If the indoor unit 100 needs to send a signal to the outdoor unit 200, the signal transmitting end 101 of the indoor-unit main control circuit 1 sends a first control signal to the indoor-unit communication circuit 2, so that the first loop 5 is triggered in conduction, and the first signal transmitted through the first loop 5 will be received by the outdoor-unit main control circuit 3, thereby the communication between the indoor unit 100 and the outdoor unit 200 is completed.

Similarly, if the outdoor unit 200 needs to send a signal to the indoor unit 100, the signal transmitting end 301 of the outdoor-unit main control circuit 3 sends a second control signal to the outdoor-unit communication circuit 4, and then the second loop 6 is triggered in conduction, and the second signal transmitted through the second loop 6 will be received by the indoor-unit main control circuit 1, thereby the communication between the outdoor unit 200 and the indoor unit 100 is completed. Some embodiments of the present disclosure provide an air conditioner 1000, in which, a first loop 5 and a second loop 6 are established through the indoor-unit communication circuit 2 and the outdoor-unit communication circuit 4. The indoor-unit main control circuit 1 sends a first signal to the outdoor unit 200 through the first loop 5, and the outdoor-unit main control circuit 3 is capable of receiving the first signal through the first loop 5. The first loop 5 is triggered in conduction in the positive half-cycle of the AC power. The outdoor-unit main control circuit 3 sends a second signal to the indoor unit 100 through the second loop 6, and the indoor-unit main control circuit 1 is capable of receiving the second signal through the second loop 6. The second loop 6 is triggered in conduction in the negative half-cycle of the AC power.

In this way, the indoor unit 100 is capable of sending signals to the outdoor unit 200 at any time, and the process of the indoor unit 100 sending signals to the outdoor unit 200 is solely controlled by the indoor-unit main control circuit 1, independent of the outdoor unit 200. Similarly, the outdoor unit 200 is also capable of sending signals to the indoor unit 100 at any time, and the process of the outdoor unit 200 sending signals to the indoor unit 100 is solely controlled by the outdoor-unit main control circuit 3, independent of the indoor unit 100. This allows the indoor unit 100 to communicate with the outdoor unit 200 and the outdoor unit 200 to communicate with the indoor unit 100 independently, without mutual interference.

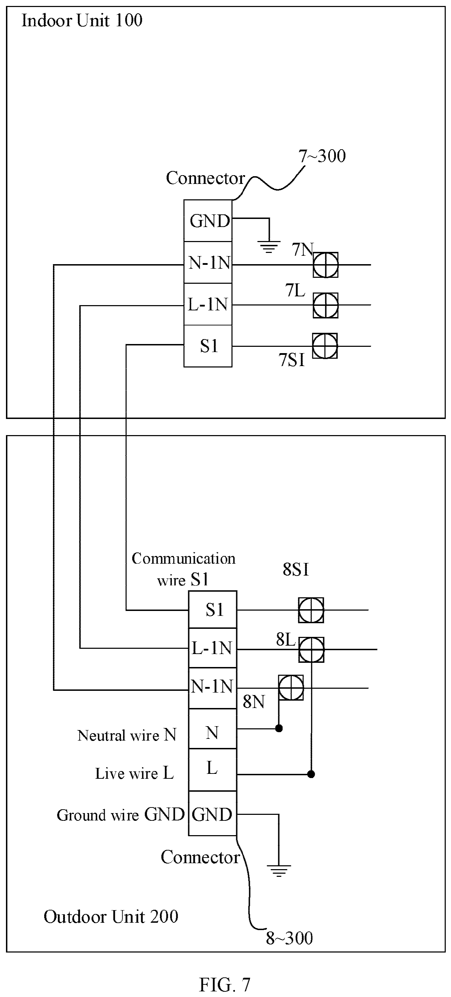

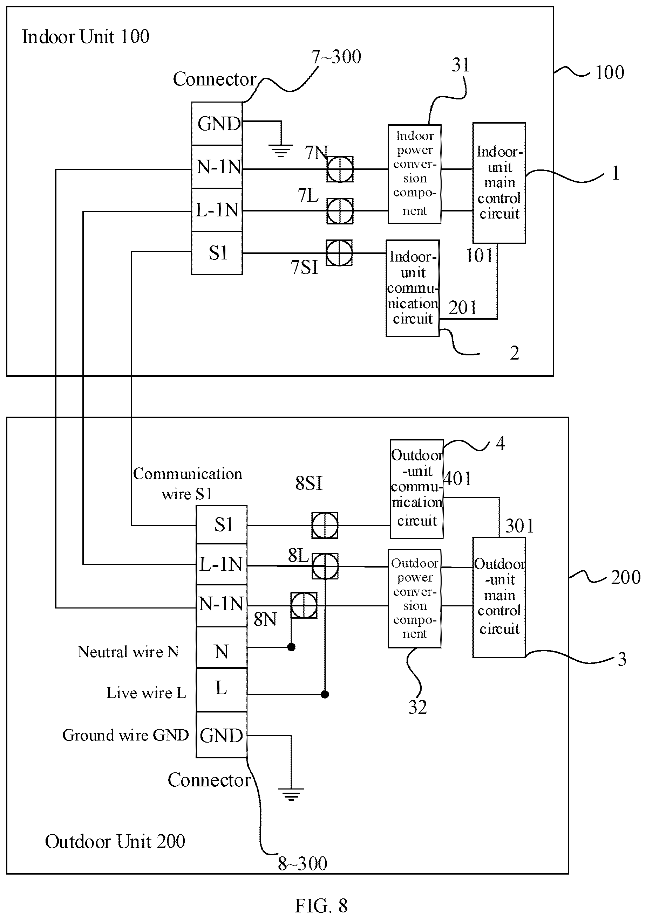

In some embodiments, as shown in FIGS. 7 and 8, the indoor unit 100 also includes an indoor-unit live wire terminal 7L. The indoor unit 100 also includes an indoor-unit neutral wire terminal 7N. The indoor unit 100 also includes an indoor-unit communication wire terminal 7SI.

As shown in FIGS. 7 and 8, the outdoor unit 200 also includes an outdoor-unit live wire terminal 8L. The outdoor unit 200 also includes an outdoor-unit neutral wire terminal 8N. The outdoor unit 200 also includes an outdoor-unit communication wire terminal 8SI.

As shown in FIGS. 7 and 8, the connector 300 includes a first connector 8. The first connector 8 is arranged inside the outdoor unit 200. An input end of the first connector 8 is electrically connected to the AC power. A live wire output end L-1N of the first connector 8 is electrically connected to the indoor-unit live wire terminal 7L, and the live wire output end L-1N of the first connector 8 is also electrically connected to the outdoor-unit live wire terminal 8L. A neutral wire output end N-1N of the first connector 8 is electrically connected to the indoor-unit neutral wire terminal 7N, and the neutral wire output end N-1N of the first connector 8 is also electrically connected to the outdoor-unit neutral wire terminal 8N. A communication output end S1 of the first connector 8 is electrically connected to the indoor-unit communication wire terminal 7SI, and the communication output end S1 of the first connector 8 is also electrically connected to the outdoor-unit communication wire terminal 8SI.

In some embodiments, as shown in FIG. 7 and FIG. 8, the connector 300 also includes a second connector 7. The second connector 7 is arranged inside the indoor unit 100. A live wire output end L-1N of the second connector 7 is electrically connected to the indoor-unit live wire terminal 7L and the live wire output end L-1N of the first connector 8. A neutral wire output end N-1N of the second connector 7 is electrically connected to the indoor-unit neutral wire terminal 7N and the neutral wire output end N-1N of the first connector 8. A communication output end S1 of the second connector 7 is electrically connected to the indoor-unit communication wire terminal 7SI and the communication output end S1 of the first connector 8. In this way, the first connector 8 is electrically connected to the second connector 7, and the second connector 7 is also electrically connected to the indoor-unit live wire terminal 7L, the indoor-unit neutral wire terminal 7N and the indoor-unit communication wire terminal 7SI, thereby the communication connection between the outdoor unit 200 and the indoor unit 100 is realized.

In a case where the connector 300 includes the second connector 7, an input end of the indoor power conversion component 31 is electrically connected to the indoor-unit live wire terminal 8L and the indoor-unit neutral wire terminal 8N, and an output end of the indoor power conversion component 31 is electrically connected to the indoor-unit main control circuit 1.

In some embodiments, the connector 300 (e.g., the first connector 8 and the second connector 8) includes a terminal block.

In the related art, the air conditioner includes a power supply control circuit which is mainly used to control a power supply line to supply power to the outdoor unit. The power supply control circuit needs to control a switch of the power supply. The switch may be an electromagnetic relay, an optocoupler thyristor, a solid-state relay, etc. However, regardless of the type of switch, a large driving current is required-for example, the driving current needs to exceed 10 mA. This will increase the energy consumption of the air conditioner and make it difficult to promote air-conditioning products.

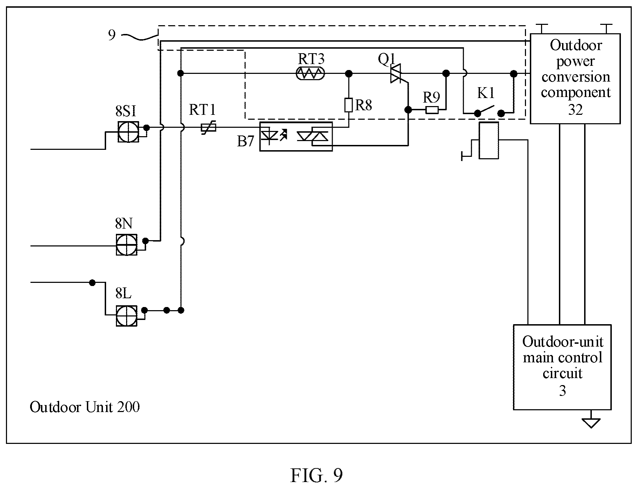

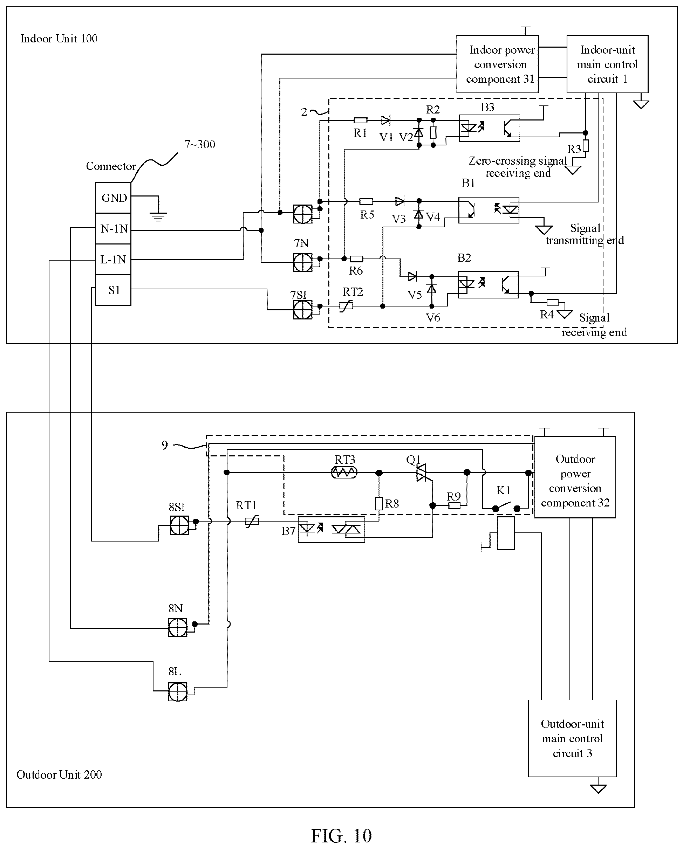

To address the aforementioned issues, as shown in FIGS. 9, 10 and 13, the outdoor unit 200 also includes a power supply control circuit 9. A first end of the power supply control circuit 9 is electrically connected to the outdoor-unit live wire terminal 8L, a second end of the power supply control circuit 9 is electrically connected to an output end of the first loop 5, and a third end of the power supply control circuit 9 is electrically connected to the outdoor power conversion component 32.

It should be noted that a light-receiving end of the first optocoupler B7 (to be described below) is substantially equivalent to the output end of the first loop 5.

As shown in FIGS. 9, 10 and 13, the power supply control circuit 9 includes a thyristor Q1. A control end of the thyristor Q1 is electrically connected to the second end of the power supply control circuit 9, a first end of the thyristor Q1 is electrically connected to the first end of the power supply control circuit 9, and a second end of the thyristor Q1 is electrically connected to the third end of the power supply control circuit 9.

It should be noted that the thyristor, also known as a Silicon Controlled Rectifier (SCR), is an important semiconductor switch element widely used in power electronics and industrial control systems. The thyristor consists of three PN junctions, having an anode, a cathode and a gate electrode. The basic working principle of the thyristor is to control the conduction of the thyristor by applying a forward bias voltage to the gate electrode, to achieve a current regulation.

When the thyristor is switched on, a positive trigger current needs to be applied to the gate electrode of the thyristor. This trigger current is usually a pulse signal, and the width and amplitude of the pulse signal need to be large enough to ensure that the anode current reaches the minimum value required to maintain the conduction of the thyristor.

In this way, the thyristor can be switched on with just one trigger signal, and will not be switched off until the next zero-crossing signal appears, which can reduce power consumption. Moreover, the current for driving the thyristor to be switched on is small, and the thyristor is intermittently switched off and on, which can further reduce the power consumption. The zero-crossing signal may refer to a control signal corresponding to the AC power changing from positive voltage to negative voltage, or from negative voltage to positive voltage.

As shown in FIGS. 9, 10 and 13, the power supply control circuit 9 also includes a switch K1 (such as a relay). A control end of the switch K1 is electrically connected to the control end of the outdoor-unit main control circuit 3, a first end of the switch K1 is electrically connected to the first end of the power supply control circuit 9, and a second end of the switch K1 is electrically connected to an input end of the outdoor power conversion component 32. The switch K1 is configured to be switched on when the outdoor-unit main control circuit 3 operates normally.

It should be noted that when the AC power passes through the thyristor Q1 to supply power to the outdoor-unit main control circuit 3 for a duration period exceeding a preset duration, and the waveform of the AC power remains continuous, the outdoor power conversion component 32 can stably supply power to the outdoor-unit main control circuit 3, which indicates that the outdoor-unit main control circuit 3 operates normally.

As shown in FIGS. 9, 10 and 13, the power supply control circuit 9 also includes a first resistor R8. The first resistor R8 functions as a current-limiting resistor. A first end of the first resistor R8 is electrically connected to the first end of the thyristor Q1. A second end of the first resistor R8 is electrically connected to the output end of the first loop 5.

In some embodiments, the first resistor R8 also functions as a bias resistor.

As shown in FIGS. 9, 10 and 13, the power supply control circuit 9 also includes a third thermistor RT3 (thermistor). A first end of the third thermistor RT3 is electrically connected to the outdoor-unit live wire terminal 8L. A second end of the third thermistor RT3 is electrically connected to the first end of the first resistor R8, and the second end of the third thermistor RT3 is also electrically connected to the first end of the thyristor Q1.

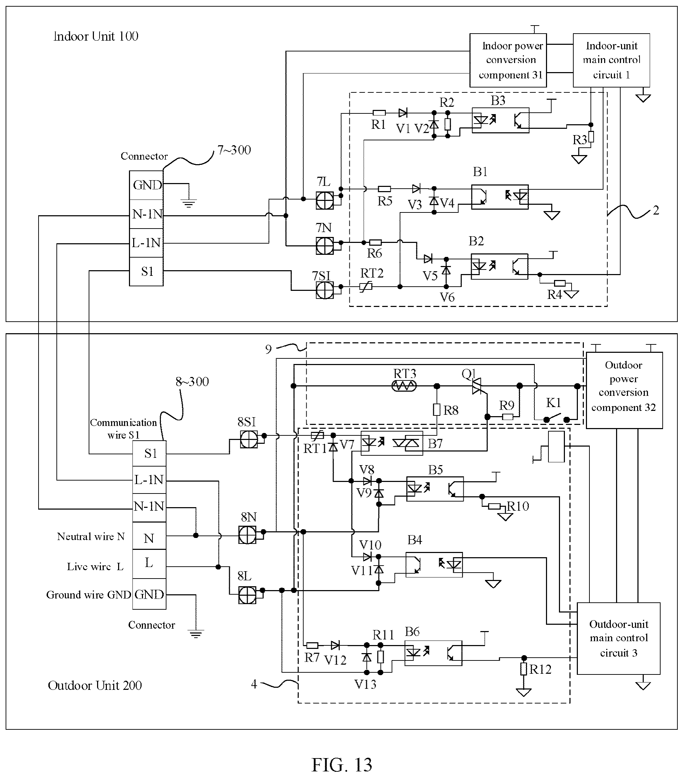

As shown in FIG. 13, the power supply control circuit 9 also includes a second resistor R9. The second resistor R9 functions as a bias resistor and a current-limiting resistor. A first end of the second resistor R9 is electrically connected to the control end of the thyristor Q1, and a second end of the second resistor R9 is electrically connected to the second end of the thyristor Q1.

In some embodiments, the second resistor R9 serves as a bias resistor at the control end (e.g., gate G) of the thyristor Q1, enabling the thyristor Q1 to form a trigger level loop when receiving a trigger signal. Here, the trigger level may refer to a preset voltage value or current value. When the input signal reaches the preset value, the circuit will generate a specific response, such as changing the output state.

In some embodiments, as shown in FIG. 13, the outdoor-unit communication circuit 4 includes a first thermistor RT1. It should be noted that the first thermistor RT1 and the third thermistor RT3 are positive temperature coefficient (PTC) resistors, respectively, and the positive temperature coefficient thermistors generally refer to semiconductor materials or components with large positive temperature coefficients. The positive temperature coefficient thermistor is a typical semiconductor resistor that exhibits a temperature sensitivity. When the temperature (Curie temperature) exceeds a preset threshold, a resistance value of the positive temperature coefficient thermistor increases stepwise with the rise in temperature.

As shown in FIG. 13, the outdoor-unit communication circuit 4 also includes a first optocoupler B7. A first light-emitting end of the first optocoupler B7 is electrically connected to the outdoor-unit communication wire terminal 8SI via the first thermistor RT1. A second light-emitting end of the first optocoupler B7 is connected to the outdoor-unit live wire terminal 8L. A first light-receiving end of the first optocoupler B7 is electrically connected to the second end of the first resistor R8. A second light-receiving end of the first optocoupler B7 is electrically connected to the first end of the second resistor R9, and the second light-receiving end of the first optocoupler B7 is also electrically connected to the control end of the thyristor Q1. In some embodiments, the first optocoupler B7 includes an optocoupler thyristor. Optocoupler thyristor is a special type of optoelectronic coupling device that achieves control and regulation of high-power equipment by converting an input optical signal into an output control electrical signal. This device is mainly composed of a light source, a photoelectric conversion element, and a thyristor device, has the characteristics of high voltage resistance, high temperature resistance, and high response speed, and can realize the functions of photoelectric isolation and electrical control. Optocoupler thyristors are widely used in many fields, including industrial control, power electronics, medical equipment, automotive electronics, and communication equipment.

When the signal transmitting end 101 of the indoor-unit main control circuit 1 sends a first control signal to control the first loop 5 to be triggered in conduction, the first optocoupler B7 is switched on, so that the thyristor Q1 is switched on, and then the power supply control circuit 9 is triggered in conduction. As a result, the outdoor power conversion component 32 can be powered by an AC power supply through the conducting power supply control circuit 9.

Here, the first optocoupler B7 may be used to receive a signal from a communication wire to control the thyristor Q1 to be switched on. When an activation signal sent from the indoor-unit main control circuit 1 is transmitted to the first optocoupler B7, the first optocoupler B7 controls the thyristor Q1 to be switched on.

As shown in FIGS. 9, 10 and 13, the thyristor Q1 and the third thermistor RT3 are connected in series between the live wire L and the outdoor power conversion component 32. In this way, when the thyristor Q1 is switched on, a conductive path is established from the power live wire L, via the third thermistor RT3, the thyristor Q1, the outdoor power conversion component 32 and the outdoor power conversion component 32, to the power neutral wire N, so that the power can be supply to the outdoor power conversion component 32.

When the outdoor power conversion component 32 can stably supply power to the outdoor-unit main control circuit 3, the switch K1 is controlled by the outdoor-unit main control circuit 3 to be switched on, so that the circuit loop where the third thermistor RT3 and the thyristor Q1 are located is short-circuited, and the AC power is directly supplied to the outdoor power conversion component 32 through the circuit loop where the switch K1 is located.

Here, when the duration of the outdoor power conversion component 32 supplying power to the outdoor-unit main control circuit 3 exceeds the preset duration and the waveform of the supplied AC power is continuous, the outdoor power conversion component 32 stably supplies power to the outdoor-unit main control circuit 3.

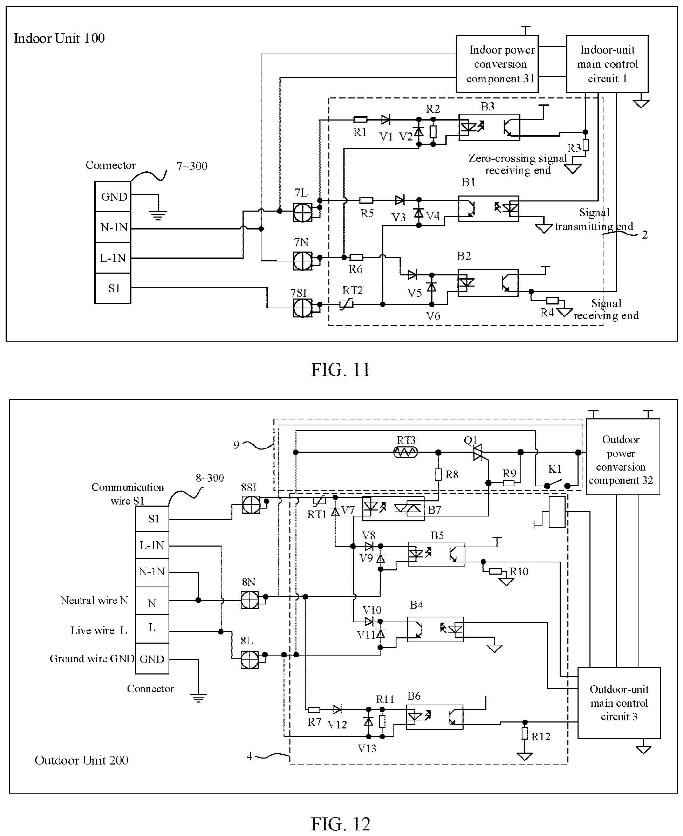

In some embodiments, as shown in FIG. 11, the indoor-unit communication circuit 2 includes a second optocoupler B1. A first light-emitting end of the second optocoupler B1 is electrically connected to a control end of the indoor-unit communication circuit 2, and the control end of the indoor-unit communication circuit 2 is connected to the signal transmitting end 101 of the indoor-unit main control circuit 1. A second light-emitting end of the second optocoupler B1 is electrically connected to a ground terminal. A first light-receiving end of the second optocoupler B1 is electrically connected to the indoor-unit live wire terminal 7L, and a second light-receiving end of the second optocoupler B1 is electrically connected to the indoor-unit communication wire terminal 7SI. The second optocoupler B1 is configured to be triggered in conduction when receiving the first control signal transmitted by the signal transmitting end of the indoor-unit main control circuit 1. The second optocoupler B1 may be triggered in conduction in the positive half-cycle of the AC power.

As shown in FIG. 11, the indoor-unit communication circuit 2 also includes a third optocoupler B2. A first light-receiving end of the third optocoupler B2 is electrically connected to the power supply terminal. A second light-receiving end of the third optocoupler B2 is electrically connected to a first output end of the indoor-unit communication circuit 2, and the first output end of the indoor-unit communication circuit 2 is electrically connected to the signal receiving end of the indoor-unit main control circuit 1. A first light-emitting end of the third optocoupler B2 is electrically connected to the indoor-unit neutral wire terminal 7N, and a second light-emitting end of the third optocoupler B2 is electrically connected to the indoor-unit communication wire terminal 7SI. The third optocoupler B2 may be switched on in the negative half-cycle of the AC power.

In some embodiments, a voltage at the power supply terminal is 5V.

As shown in FIG. 11, the indoor-unit communication circuit 2 also includes a first rectifier circuit. A first end of the first rectifier circuit is electrically connected to the indoor-unit live wire terminal 7L.

For example, the first rectifier circuit includes a third resistor R1, and a first end of the third resistor R1 is electrically connected to the indoor-unit live wire terminal 7L. The third resistor R1 has the functions of voltage division and current limiting. The first rectifier circuit also includes a first diode V1. An anode of the first diode V1 is electrically connected to a second end of the third resistor R1. The first diode V1 has the functions of half-wave rectification and preventing reverse conduction.

As shown in FIG. 11, the indoor-unit communication circuit 2 also includes a fourth optocoupler B3. A first light-receiving end of the fourth optocoupler B3 is electrically connected to the power supply terminal. A second light-receiving end of the fourth optocoupler B3 is electrically connected to a second output end of the indoor-unit communication circuit 2, and the second output end of the indoor-unit communication circuit 2 is electrically connected to a zero-crossing signal receiving end of the indoor-unit main control circuit 1. A first light-emitting end of the fourth optocoupler B3 is electrically connected to the second end of the first rectifier circuit (such as a cathode of the first diode V1), and a second light-emitting end of the fourth optocoupler B3 is electrically connected to the indoor-unit neutral wire terminal 7N. The fourth optocoupler B3 has the function of detecting a zero-crossing signal of the AC power.

In this case, the indoor-unit main control circuit 1 is also configured to receive the zero-crossing signal when the fourth optocoupler B3 is switched on.

In some embodiments, the fourth optocoupler B3 is switched on when the AC power is in the positive half-cycle and the voltage after crossing zero rises to exceed a switch-on voltage of the fourth optocoupler B3. Thereby, the zero-crossing signal is received by the indoor-unit main control circuit 1, the first signal and the first control signal are sent through the signal transmitting end 101 of the indoor-unit main control circuit 1.

In some embodiments, as shown in FIG. 11, the indoor-unit communication circuit 2 also includes a second thermistor RT2. A second thermistor RT2 has the function of voltage reduction and current limiting. Similar to the first thermistor RT1 and the third thermistor RT3, the second thermistor RT2 is a positive temperature coefficient thermistor.

In some embodiments, as shown in FIG. 12, the outdoor-unit communication circuit 4 includes a fifth optocoupler B4. A first light-emitting end of the fifth optocoupler B4 is electrically connected to a control end of the outdoor-unit communication circuit 4, and the control end of the outdoor-unit communication circuit 4 is connected to the signal transmitting end of the outdoor-unit main control circuit 3. A second light-emitting end of the fifth optocoupler B4 is electrically connected to the ground terminal. A first light-receiving end of the fifth optocoupler B4 is electrically connected to the first optocoupler B7, and a second light-receiving end of the fifth optocoupler B4 is electrically connected to the outdoor-unit live wire terminal 8L. The fifth optocoupler B4 is configured to be switched on when receiving the second control signal, and the fifth optocoupler B4 can be switched on in the negative half-cycle of the AC power.

As shown in FIG. 12, the outdoor-unit communication circuit 4 also includes a sixth optocoupler B5. A first light-receiving end of the sixth optocoupler B5 is electrically connected to the power supply terminal. A second light-receiving end of the sixth optocoupler B5 is electrically connected to a first output end of the outdoor-unit communication circuit 4, and the first output end of the outdoor-unit communication circuit 4 is electrically connected to the signal receiving end of the outdoor-unit main control circuit 3. A first light-emitting end of the sixth optocoupler B5 is electrically connected to the first light-receiving end of the fifth optocoupler B4, and the first light-emitting end of the sixth optocoupler B5 is also electrically connected to the second light-emitting end of the first optocoupler B7 and the outdoor-unit communication wire terminal 8SI. A second light-emitting end of the sixth optocoupler B5 is electrically connected to the outdoor-unit neutral wire terminal 8N. The sixth optocoupler B5 can be switched on in the positive half-cycle of the AC power.

In some embodiments, as shown in FIG. 12, the outdoor-unit communication circuit 4 also includes a second rectifier circuit. A first end of the second rectifier circuit is electrically connected to the outdoor-unit neutral wire terminal 8N. For example, the second rectifier circuit includes a fourth resistor R7, and a first end of the fourth resistor R7 is electrically connected to the outdoor-unit neutral wire terminal 8N. The second rectifier circuit also includes a second diode V12. An anode of the second diode V12 is electrically connected to a second end of the fourth resistor R7. The fourth resistor R7 has the function of voltage reduction and current limiting.

The outdoor-unit communication circuit 4 also includes a seventh optocoupler B6. A first light-receiving end of the seventh optocoupler B6 is electrically connected to the power supply terminal. A second light-receiving end of the seventh optocoupler B6 is electrically connected to a second output end of the outdoor-unit communication circuit 4, and the second output end of the outdoor-unit communication circuit 4 is electrically connected to a zero-crossing signal receiving end of the outdoor-unit main control circuit 3. A first light-emitting end of the seventh optocoupler B6 is electrically connected to a second end of the second rectifier circuit (such as a cathode of the second diode V12), and a second light-emitting end of the seventh optocoupler B6 is electrically connected to the outdoor-unit live wire terminal 8L.

In this case, the outdoor-unit main control circuit 3 is also configured to receive a zero-crossing signal when the seventh optocoupler B6 is switched on.

In some embodiments, the seventh optocoupler B6 is switched on when the AC power is in the negative half-cycle and an amplitude of the voltage after crossing zero rises to exceed a switch-on voltage of the seventh optocoupler B6. thereby, the zero-crossing signal is received by the outdoor-unit main control circuit 3, and the second signal and the second control signal are sent through the signal transmitting end 301 of the outdoor-unit main control circuit 3.

As shown in FIG. 13, the AC power is input to the first connector 8 via the power supply line. The ground wire GND serves as a protective grounding line, while the power-supply live wire L (i.e., the aforementioned live wire L) and the power-supply neutral wire N (i.e., the aforementioned neutral wire N) function as the power supply lines. After being connected to connector 300, the live wire L and neutral wire N are respectively routed to the outdoor unit 200 and indoor unit 100. For example, for the part where the live wire L or the neutral wire is connected to the outdoor unit 200, the live wire L is connected to the outdoor-unit live wire terminal 8L, and the neutral wire N is connected to the outdoor-unit neutral wire terminal 8N.

When the air conditioner 1000 is on standby and stops operating, the outdoor-unit main control circuit 3 is powered off. At this time, the switch K1 and the thyristor Q1 are disconnected, so the power supply of the outdoor unit 200 is completely disconnected, which can avoid the generation of standby power consumption. In addition, the communication wire SI is connected to the outdoor-unit communication wire terminal 8SI in the outdoor unit 200 and to the indoor-unit communication wire terminal 7SI in the indoor unit 100. When the air conditioner 1000 is operating, the indoor unit 100 and the outdoor unit 200 transmit operation information through the communication wire SI.

It should be noted that the power supply is connected to the first connector 8 through the live wire output end L-IN and the neutral wire output end N-IN of the first connector 8. In addition, the live wire L is connected to the indoor-unit live wire terminal 7L, and the neutral wire N is connected to the indoor-unit neutral wire terminal 7N. The live wire L and the neutral wire N, after being connected to the indoor unit 100, are connected to the indoor power conversion component 31. The indoor power conversion module 31 can convert high-voltage alternating current (e.g., Alternating Current (AC) 220V/50HZ) into low-voltage direct current (e.g., Direct Current (DC) 5V or 12V), and provide the low-voltage direct current to the indoor-unit main control circuit 1.

In addition, the live wire L and the neutral wire N form an AC zero-crossing detection circuit through the first rectifier circuit and the fourth optocoupler B3. In the first rectifier circuit, the third resistor R1 has the function of voltage reduction and current limiting, and the first diode V1 has the function of half-wave rectification. The fourth optocoupler B3 is capable of detecting the AC zero-crossing signal (i.e., the control signal corresponding to the AC power changing from positive voltage to negative voltage, or from negative voltage to positive voltage), and sending a detection result to the indoor-unit main control circuit 1.

In some embodiments, as shown in FIG. 13, the indoor-unit communication circuit 2 also includes a seventh resistor R2. The indoor-unit communication circuit 2 also includes a twelfth diode V2. The seventh resistor R2 and the twelfth diode V2 have the function of clamping and protecting the light-emitting end (such as the first light-emitting end and the second light-emitting end) of the fourth optocoupler B3.

In some embodiments, the second optocoupler B1, the third optocoupler B2, the fifth optocoupler B4, and the sixth optocoupler B5 have the functions of signal transmission and electrical isolation, respectively. It can be understood that the second optocoupler B1 serves as the signal transmitting end of the indoor-unit main control circuit 1, the third optocoupler B2 serves as the signal receiving end of the indoor-unit main control circuit 1, the fifth optocoupler B4 serves as the signal transmitting end of the outdoor-unit main control circuit 3, and the sixth optocoupler B5 serves as the signal receiving end of the outdoor-unit main control circuit 3.

In some embodiments, as shown in FIG. 13, the indoor-unit communication circuit 2 also includes a third diode V3. The indoor-unit communication circuit 2 also includes a fourth diode V4. The indoor-unit communication circuit 2 also includes a fifth diode V5. The indoor-unit communication circuit 2 also includes a sixth diode V6.

The outdoor-unit communication circuit 4 also includes a seventh diode V7. The outdoor-unit communication circuit 4 also includes an eighth diode V8. The outdoor-unit communication circuit 4 also includes a ninth diode V9. The outdoor-unit communication circuit 4 also includes a tenth diode V10. The outdoor-unit communication circuit 4 also includes an eleventh diode V11. The outdoor-unit communication circuit 4 also includes a thirteenth diode V13.

A cathode of the seventh diode V7 is electrically connected to the outdoor-unit communication wire terminal 8SI and the first light-emitting end of the first optocoupler B7, and an anode of the seventh diode V7 is electrically connected to an anode of the eighth diode V8 and the second light-emitting end of the first optocoupler B7. A cathode of the eighth diode V8 is electrically connected to the first light-emitting end of the sixth optocoupler B5 and a cathode of the ninth diode V9. An anode of the ninth diode V9 is electrically connected to the second light-emitting end of the sixth optocoupler B5 and the outdoor-unit neutral wire terminal 8N. An anode of the tenth diode V10 is electrically connected to the anode of the seventh diode V7, the second light-emitting end of the first optocoupler B7 and the anode of the eighth diode V8. A cathode of the tenth diode V10 is electrically connected to a cathode of the eleventh diode V11 and the first light-receiving end of the fifth optocoupler B4, and an anode of the eleventh diode V11 is electrically connected to the second light-receiving end of the fifth optocoupler B4 and the outdoor-unit live wire terminal 8SI.

Here, the third diode V3, the fourth diode V4, the fifth diode V5, the sixth diode V6, the seventh diode V7, the eighth diode V8, the ninth diode V9, the tenth diode V10, the eleventh diode V11 and the thirteenth diode V13 each have unidirectional isolation and bypass clamping protection functions, preventing damage to the communication circuit caused by abnormal high voltage due to incorrect wiring during the installation of air conditioner 1000.

For example, if the live wire L is mistakenly connected to the communication wire SI of the indoor unit, due to the presence of the fifth diode V5, the current cannot flow through the fifth diode V5 in the reverse direction, thereby the third optocoupler B2 can be prevented from being damaged.

If the neutral wire N is mistakenly connected to the communication wire SI, due to the presence of the third diode V3 and the fourth diode V4, the voltage across the second optocoupler B1 is limited to prevent the second optocoupler B1 from being damaged. When the current in the communication circuit is abnormal (e.g., the current value is greater than a preset current value), the temperature of the first thermistor RT1 rises rapidly and its resistance value increases rapidly, to promptly reduce the current, so that the communication circuit can be prevented from being damaged due to abnormal current caused by incorrect wiring. For example, in case that the live wire L is mistakenly connected to the outdoor-unit communication wire terminal 8SI, the temperature of the first thermistor RT1 can rise rapidly, and its resistance value will increase rapidly, so that the current can be promptly reduced to avoid damage to the first optocoupler B7.

In some embodiments, as shown in FIG. 13, the indoor-unit communication circuit 2 also includes an eighth resistor R3. The indoor-unit communication circuit 2 also includes a ninth resistor R4. The eighth resistor R3 and the ninth resistor R4 are grounded respectively.

The indoor-unit communication circuit 2 also includes a fifth resistor R5. The indoor-unit communication circuit 2 also includes a sixth resistor R6. The fifth resistor R5 and the sixth resistor R6 respectively perform the functions of voltage reduction and current limiting.

A first end of the fifth resistor R5 is electrically connected to the indoor-unit live wire terminal 7L, and a second end of the fifth resistor R5 is electrically connected to an anode of the third diode V3. A cathode of the fourth diode V4 is electrically connected to a cathode of the third diode V3 and the first light-receiving end of the second optocoupler B1, and an anode of the fourth diode V4 is electrically connected to the second light-receiving end of the second optocoupler B1 and the indoor-unit communication wire terminal 7SI. A first end of the sixth resistor R6 is electrically connected to the indoor-unit neutral wire terminal, a second end of the sixth resistor R6 is electrically connected to an anode of the fifth diode V5. A cathode of the fifth diode V5 is electrically connected to the first light-emitting end of the third optocoupler B2 and a cathode of the sixth diode V6. An anode of the sixth diode V6 is electrically connected to the second light-emitting end of the third optocoupler B2 and the indoor-unit communication wire terminal 7SI.

The outdoor-unit communication circuit 4 also includes a tenth resistor R10. The outdoor-unit communication circuit 4 also includes a twelfth resistor R12. The tenth resistor R10 and the twelfth resistor R12 are grounded respectively.

The outdoor-unit communication circuit 4 also includes an eleventh resistor R11. The eleventh resistor R11 serves to clamp and protect the light-emitting end of the seventh optocoupler B6.

The following example introduces the specific working process of the air conditioner 1000.

For a power-off state of the air conditioner 1000: when the air conditioner 1000 receives the AC power from the outdoor unit 200, the AC power is received through the second connector 7 to the outdoor unit 200 and to the terminal block (such as the first connector 8) of the indoor unit. Since the thyristor Q1 and the switch K1 are disconnected, the outdoor unit 200 is powered off and thus unable to operate.

It should be noted that since the air conditioner 1000 is powered through the outdoor unit, and the indoor unit 100 needs to receive the user's instructions, the indoor unit 100 generally remains powered, and the power-off state of the air conditioner 1000 may refer to the power-off state of the outdoor unit 200.

The power supply is connected to the indoor unit 100 through the first connector 8, and the indoor power conversion component 31 converts the high-voltage AC power into the low-voltage DC power and supplies power to the indoor-unit main control circuit 1.

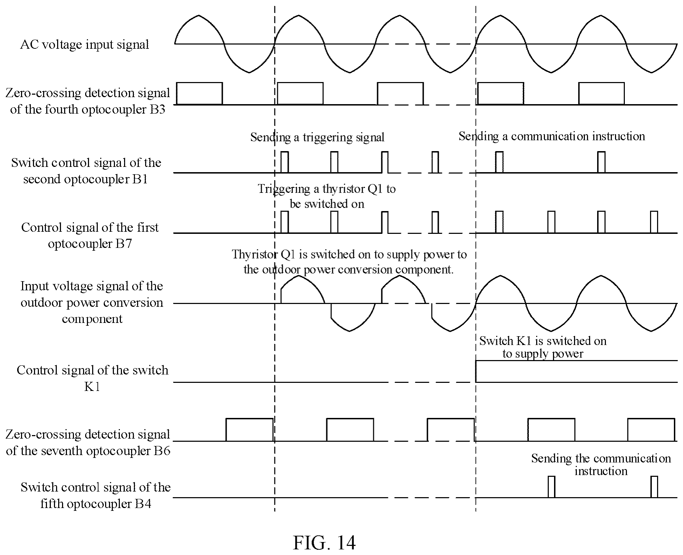

As shown in FIG. 14, when the fourth optocoupler B3 is switched on, a high level (e.g., 5V) will be received by the indoor-unit main control circuit 1. When the fourth optocoupler B3 is switched off, a low level (e.g., 0V) will be received by the indoor-unit main control circuit 1 as the eighth resistor R3 is grounded.

In addition, the live wire L or the neutral wire N, after passing through the half-wave rectifier circuit, is connected to the second optocoupler B1 and the third optocoupler B2 respectively, and is connected to the communication wire SI. After reaching the outdoors, the live wire L or the neutral wire N passes through the first thermistor RT1 and the first optocoupler B7 and then is connected to the sixth optocoupler B5 and the fifth optocoupler B4 respectively. In this way, an indoor and outdoor communication circuits can be formed.

For a standby mode of the air conditioner 1000: since the second optocoupler B1 stops sending signals, the thyristor Q1 is disconnected, the outdoor-unit main control circuit 3 controls the switch K1 to be disconnected, the outdoor-unit main control circuit 3 is powered off and stops operating. At this time, only the indoor-unit main control circuit 1 is powered on and in operation.

Referring to FIG. 14, the fourth optocoupler B3 can only be switched on to operate when the AC signal voltage after crossing zero rises above the switch-on voltage of the optocoupler. Therefore, the fourth optocoupler B3 can function to detect the AC zero-crossing signal and output the zero-crossing signal to the indoor-unit main control circuit 1. When the air conditioner 1000 is in the standby mode, the second optocoupler B1 is cut off, so no signal (such as the first control signal and the first signal) is output from the communication wire SI to the outdoor unit 200, and the outdoor-unit communication circuit 4 does not function.

When a power-on instruction is received by the indoor unit 100, the indoor-unit main control circuit 1 controls the second optocoupler B1 to be switched on. At this time, the current enters from the live wire L, passes through the fifth resistor R5, the third diode V3, the second optocoupler B1, and the second thermistor RT2 of the indoor unit 100 in sequence, and then outputs to the first thermistor RT1, the first optocoupler B7, the eighth diode V8, and the sixth optocoupler B5 of the outdoor unit 200 through the communication wire SI and then returns to the outdoor-unit neutral wire terminal 8N.

After the first optocoupler B7 is switched on, the thyristor Q1 may be triggered to be switched on. After the thyristor Q1 is switched on, the live wire L supplies power to the outdoor power conversion component 32 through the third thermistor RT3 and the thyristor Q1. After the outdoor power conversion component 32 is powered for a preset duration (for example, 2 s), referring to FIG. 14, the outdoor power conversion component 32 can stably supply power to the outdoor-unit main control circuit 3. After the outdoor-unit main control circuit 3 operates normally, the outdoor-unit main control circuit 3 controls the switch K1 to switched on, so that the branch of the third thermistor RT3 and the thyristor Q1 is bypassed. In this way, when the outdoor unit 200 is operating, power can be supplied to the outdoor unit 200 through the switch K1.

As shown in FIG. 13, the neutral wire N is connected to the live wire through the fourth resistor R7, the second diode V12 and the seventh optocoupler B6, and a zero-crossing detection signal is generated and output to the outdoor-unit main control circuit 3. The principle of the seventh optocoupler B6 detecting the zero-crossing signal of the AC power is the same as that of the fourth optocoupler B3. At this point, the outdoor-unit main control circuit 3 completes the access of power supply, and the indoor unit 100 and the outdoor unit 200 can start communication.

Referring to FIGS. 13 and 14, at this time, the indoor unit 100 obtains a zero-crossing moment of the AC power detected by the fourth optocoupler B3 according to the zero-crossing signal, and sends a first communication instruction (such as a first signal) by controlling the on and off of the second optocoupler B1 (a high level 1 is issued when the second optocoupler B1 is switched on, and a low level 0 is issued when the second optocoupler B1 is switched off). The outdoor unit 200 receives the first communication instruction issued by the indoor unit 100 through the sixth optocoupler B5, and controls the relevant load of the outdoor unit 200 to start operating according to the first communication instruction.

The specific signal flow direction for the first communication instruction is as follows: live wire L - fifth resistor R5 - third diode V3 - second optocoupler B1 - second thermistor RT2 - first thermistor RT1 - first optocoupler B7 - eighth diode V8 - sixth optocoupler B5 - neutral wire N. The signal flow loop constitutes the first loop 5.

Since the first loop 5 can only be unidirectionally conducted, the first loop 5 can only be triggered in conduction when the live wire L outputs a high voltage. That is, the first loop 5 can only be triggered in conduction during the positive half-cycle of the AC power. Thus, only after the fourth optocoupler B3 detects the zero-crossing moment when the AC power changes from negative voltage to positive voltage can the indoor-unit main control circuit 1 send the first signal and the first control signal. In addition, the outdoor unit 200 obtains the zero-crossing moment of the AC power detected by the seventh optocoupler B6 according to the zero-crossing signal, and the outdoor unit 200 sends a second communication instruction (such as a second signal) by controlling the on and off of the fifth optocoupler B4 (a high level 1 is issued when the fifth optocoupler B4 is switched on, and a low level 0 is issued when the fifth optocoupler B4 is switched off). The indoor unit 100 receives the second communication instruction issued by the outdoor unit 200 through the third optocoupler B2, and controls the relevant load of the indoor unit 100 to adjust an operating state according to the received second communication instruction.

The specific signal flow direction of the second communication instruction is as follows: neutral wire N - sixth resistor R6 - fifth diode V5 - third optocoupler B2 - second thermistor RT2 - first thermistor RT1 - first optocoupler B7 - tenth diode V10 - fifth optocoupler B4 - live wire L. The signal flow loop constitutes the second loop 6. Since the second loop 6 can only be unidirectionally conducted, the second loop 6 can only be triggered in conduction when the neutral wire N outputs a high voltage. That is, the second loop 6 can only be triggered in conduction during the negative half-cycle of the AC power. Thus, only after the seventh optocoupler B6 detects the zero-crossing moment when the AC power changes from positive voltage to negative voltage can the outdoor-unit main control circuit 3 send the second signal and the second control signal.

Compared with the communication circuit (current loop communication circuit) in the related art, in the air conditioner 1000 of some embodiments of the present disclosure, the indoor and outdoor units independently send and receive communication instructions without affecting each other. For example, when the indoor unit 100 sends an instruction, since the signal loop does not pass through the fifth optocoupler B4 of the outdoor unit 200, the instruction sent by the indoor unit 100 will not be restricted by whether the fifth optocoupler B4 is switched on or not.

In addition, when the indoor unit 100 sends an instruction, a signal loop (such as the first circuit 5) can only be triggered on during the positive half-cycle of the AC power, and when the outdoor unit 200 sends an instruction, a signal loop (such as the second loop 6) can only be triggered on during the negative half-cycle of the AC power. Thus, referring to FIG. 14, in the case of sharing a communication wire SI, even if the indoor and outdoor units send signals simultaneously, the indoor unit 100 and the outdoor unit 200 can transmit their own signals independently without interfering with each other.

So far, the indoor unit 100 powers on the outdoor unit 200 after receiving the power-on instruction, and an operating process of communication between the indoor unit 100 and the outdoor unit 200 is completed.

When a shutdown instruction is received by the indoor unit 100, the indoor unit 100 controls the second optocoupler B1 to be switched on to issue a communication instruction for shutdown operation. The outdoor unit 200, after receiving the shutdown instruction through the sixth optocoupler B5, stops the operation of relevant loads of the outdoor unit (such as a compressor, an outdoor fan), and replies to the indoor unit 100 with the information about receiving the shutdown command via the fifth optocoupler B4. The indoor unit 100, after receiving the reply, controls the second optocoupler B1 to be switched off, and the current in the communication loop SI stops being output to the outdoor unit 200. After waiting for a preset duration, if the outdoor unit 200 confirms that there is no new instruction sent by the indoor unit 100, the fifth optocoupler B4 is controlled to be switched off, and the switch K1 is controlled to be switched off, thereby cutting off the power supply of the outdoor unit 200. At this time, since the second optocoupler B1 and the fifth optocoupler B4 are switched off respectively, and there is no signal to control the first optocoupler B7 to be switched on, the thyristor Q1 is switched off, and all paths from the power supply to the outdoor-unit main control circuit 3 are cut off. At this point, the outdoor unit 200 completes the shutdown process and enters the power-off state, waiting for the next power-on operation.

It should be noted that any technical scheme disclosed in the present disclosure can, to a certain extent, address one or more of the aforementioned technical problems and achieve certain disclosed objectives. Multiple technical disclosures may also be combined into an integrated scheme to address one or more of the aforementioned technical problems and achieve certain disclosed objectives. Or alternatively, partial technical disclosures may be combined into an integrated scheme, while employing related technologies and inferior alternatives, yet compensating for the inferior trends through the means of this technical disclosure, to address one or more of the aforementioned technical problems and achieve certain disclosed objectives to a certain extent as a whole. Each technical disclosure, when combined into a complete technical scheme, forms an organically inseparable integrated scheme that collectively addresses technical problems and achieves certain disclosed objectives.

Any technical disclosure in the present disclosure, as well as the re-combination of multiple technical disclosures, can form a complete technical scheme capable of addressing one or more of the aforementioned technical issues and achieving the disclosed objectives. All such content falls within the scope of the present disclosure and constitutes the content directly and unambiguously determined according to the content of the present disclosure.

Persons skilled in the art will understand that the disclosure scope of the present disclosure is not limited to the above-mentioned specific embodiments, and certain elements of the embodiments may be modified and replaced without departing from the spirit of the present disclosure. The scope of the present disclosure is limited by the attached claims.

## Claims

1. An air conditioner, comprising:
an indoor unit, comprising:
an indoor-unit main control circuit, capable of controlling an operation of an indoor-unit communication circuit; and
the indoor-unit communication circuit, a control end of the indoor-unit communication circuit being electrically connected to a signal transmitting end of the indoor-unit main control circuit; and
an outdoor unit, electrically connected to the indoor unit, and comprising:
an outdoor-unit main control circuit, capable of controlling an operation of an outdoor-unit communication circuit; and
the outdoor-unit communication circuit, a control end of the outdoor-unit communication circuit being electrically connected to a signal transmitting end of the outdoor-unit main control circuit; the outdoor-unit communication circuit being electrically connected to the indoor-unit communication circuit;
a first part of the indoor-unit communication circuit and a first part of the outdoor-unit communication circuit constituting a first loop; the signal transmitting end of the indoor-unit main control circuit being capable of sending a first control signal; the first control signal being capable of controlling the first loop to be triggered in conduction during a positive half-cycle of an alternating current (AC) power; the outdoor-unit main control circuit being capable of receiving a first signal transmitted by the first loop; the first signal being capable of controlling an operation of the outdoor unit; and
a second part of the indoor-unit communication circuit and a second part of the outdoor-unit communication circuit constituting a second loop; the signal transmitting end of the outdoor-unit main control circuit being capable of sending a second control signal; the second control signal being capable of controlling the second loop to be triggered in conduction during a negative half-cycle of the AC power; the indoor-unit main control circuit being capable of receiving a second signal transmitted by the second loop; the second signal being capable of controlling an operation of the indoor unit.

2. The air conditioner according to claim 1, further comprising a connector, wherein,
the indoor unit further comprises: an indoor-unit live wire terminal, an indoor-unit neutral wire terminal and an indoor-unit communication wire terminal;
the outdoor unit further comprises: an outdoor-unit live wire terminal, an outdoor-unit neutral wire terminal and an outdoor-unit communication wire terminal;
an input end of the connector is electrically connected to an AC power supply, and a live wire output end of the connector is electrically connected to the indoor-unit live wire terminal and the outdoor-unit live wire terminal respectively;
a neutral wire output end of the connector is electrically connected to the indoor-unit neutral wire terminal and the outdoor-unit neutral wire terminal; and
a communication output end of the connector is electrically connected to the indoor-unit communication wire terminal and the outdoor-unit communication wire terminal.

3. The air conditioner according to claim 2, wherein the outdoor unit further comprises:
an outdoor power conversion component which is capable of supplying power to the outdoor main control circuit; and
a power supply control circuit, wherein a first end of the power supply control circuit is electrically connected to the outdoor-unit live wire terminal, a second end of the power supply control circuit is electrically connected to an output end of the first loop, and a third end of the power supply control circuit is electrically connected to the outdoor power conversion component;
wherein, the power supply control circuit is capable of being triggered on when the first control signal is sent from the signal transmitting end of the indoor-unit main control circuit that enables the first loop to be triggered in conduction, and the outdoor power conversion component is powered by the AC power supply through the power supply control circuit that is triggered on.

4. The air conditioner according to claim 3, wherein the power supply control circuit comprises a thyristor; a control end of the thyristor is electrically connected to the second end of the power supply control circuit, a first end of the thyristor is electrically connected to the first end of the power supply control circuit, and a second end of the thyristor is electrically connected to the third end of the power supply control circuit.

5. The air conditioner according to claim 4, wherein the power supply control circuit further comprises a switch; a control end of the switch is electrically connected to a control end of the outdoor-unit main control circuit, a first end of the switch is electrically connected to the first end of the power supply control circuit, and a second end of the switch is electrically connected to an input end of the outdoor power conversion component; and the switch is capable of being switched on when the outdoor-unit main control circuit is in operation.

6. The air conditioner according to claim 5, wherein the power supply control circuit further comprises:
a first resistor, wherein a first end of the first resistor is electrically connected to the first end of the thyristor, and a second end of the first resistor is electrically connected to the output end of the first loop; and
a second resistor, wherein a first end of the second resistor is electrically connected to the control end of the thyristor, and a second end of the second resistor is electrically connected to the second end of the thyristor.

7. The air conditioner according to claim 6, wherein the outdoor-unit communication circuit further comprises a first optocoupler, wherein a first light-emitting end of the first optocoupler is electrically connected to the outdoor-unit communication wire terminal, a second light-emitting end of the first optocoupler is connected to the outdoor-unit live wire terminal or the outdoor-unit neutral wire terminal, a first light-receiving end of the first optocoupler is electrically connected to the second end of the first resistor, a second light-receiving end of the first optocoupler is electrically connected to the first end of the second resistor and the control end of the thyristor; and
the first optocoupler is capable of controlling the thyristor to be switched on when the first loop is triggered in conduction.

8. The air conditioner according to claim 6 or 7, wherein the power supply control circuit further comprises a thermistor, wherein a first end of the thermistor is electrically connected to the outdoor-unit live wire terminal, and a second end of the thermistor is electrically connected to the first end of the first resistor and the first end of the thyristor.

9. The air conditioner according to any one of claims 2 to 8, wherein the indoor-unit communication circuit comprises:
a second optocoupler, wherein a first light-emitting end of the second optocoupler is electrically connected to the control end of the indoor-unit communication circuit, and a second light-emitting end of the second optocoupler is electrically connected to a ground terminal; a first light-receiving end of the second optocoupler is electrically connected to the indoor-unit live wire terminal, and a second light-receiving end of the second optocoupler is electrically connected to the indoor-unit communication wire terminal; the second optocoupler is capable of being switched on when receiving the first control signal, and the second optocoupler is capable of being switched on during the positive half-cycle of the AC power; and
a third optocoupler, wherein a first light-receiving end of the third optocoupler is electrically connected to a power supply terminal, and a second light-receiving end of the third optocoupler is electrically connected to a first output end of the indoor-unit communication circuit; a first light-emitting end of the third optocoupler is electrically connected to the indoor-unit neutral wire terminal, and a second light-emitting end of the third optocoupler is electrically connected to the indoor-unit communication wire terminal; the first output end of the indoor-unit communication circuit is electrically connected to the signal receiving end of the indoor-unit main control circuit; and the third optocoupler is capable of being switched on during the negative half-cycle of the AC power.

10. The air conditioner according to any one of claims 2 to 9, wherein the indoor-unit communication circuit comprises:
a first rectifier circuit, wherein a first end of the first rectifier circuit is electrically connected to the indoor-unit live wire terminal; and
a fourth optocoupler, wherein a first light-receiving end of the fourth optocoupler is electrically connected to the power supply terminal, and a second light-receiving end of the fourth optocoupler is electrically connected to a second output end of the indoor-unit communication circuit; a first light-emitting end of the fourth optocoupler is electrically connected to a second end of the first rectifier circuit, and a second light-emitting end of the fourth optocoupler is electrically connected to the indoor-unit neutral wire terminal,
wherein, the second output end of the indoor-unit communication circuit is electrically connected to a zero-crossing signal receiving end of the indoor-unit main control circuit; and the indoor-unit main control circuit is capable of receiving a zero-crossing signal when the fourth optocoupler is switched on.

11. The air conditioner according to claim 10, wherein the first rectifier circuit comprises:
a third resistor, wherein a first end of the third resistor is electrically connected to the indoor-unit live wire terminal; and
a first diode, wherein an anode of the first diode is electrically connected to a second end of the third resistor, and a cathode of the first diode is electrically connected to the first light-emitting end of the fourth optocoupler.

12. The air conditioner according to any one of claims 2 to 11, wherein the outdoor-unit communication circuit comprises:
a fifth optocoupler, wherein a first light-emitting end of the fifth optocoupler is electrically connected to the control end of the outdoor-unit communication circuit, and a second light-emitting end of the fifth optocoupler is electrically connected to a ground terminal; a first light-receiving end of the fifth optocoupler is electrically connected to the outdoor-unit communication wire terminal; a second light-receiving end of the fifth optocoupler is electrically connected to the outdoor-unit live wire terminal; the fifth optocoupler is capable of being switched on when receiving the second control signal, and the fifth optocoupler is capable of being switched on during the negative half-cycle of the AC power; and
a sixth optocoupler, wherein a first light-receiving end of the sixth optocoupler is electrically connected to a power supply terminal, and a second light-receiving end of the sixth optocoupler is electrically connected to a first output end of the outdoor-unit communication circuit; a first light-emitting end of the sixth optocoupler is electrically connected to the first light-receiving end of the fifth optocoupler, and a second light-emitting end of the sixth optocoupler is electrically connected to the outdoor-unit neutral wire terminal; the first output end of the outdoor-unit communication circuit is electrically connected to the signal receiving end of the outdoor-unit main control circuit; the sixth optocoupler is capable of being switched on during the positive half-cycle of the AC power.

13. The air conditioner according to any one of claims 2 to 12, wherein the outdoor-unit communication circuit comprises:
a second rectifier circuit, wherein a first end of the second rectifier circuit is electrically connected to the outdoor-unit neutral wire terminal; and
a seventh optocoupler, wherein a first light-receiving end of the seventh optocoupler is electrically connected to a power supply terminal, and a second light-receiving end of the seventh optocoupler is electrically connected to a second output end of the outdoor-unit communication circuit; a first light-emitting end of the seventh optocoupler is electrically connected to a second end of the second rectifier circuit, and a second light-emitting end of the seventh optocoupler is electrically connected to the outdoor-unit live wire terminal,
wherein the second output end of the outdoor-unit communication circuit is electrically connected to a zero-crossing signal receiving end of the outdoor-unit main control circuit, and the outdoor-unit main control circuit is capable of receiving a zero-crossing signal when the seventh optocoupler is switched on.

14. The air conditioner according to claim 13, wherein the second rectifier circuit comprises:
a fourth resistor, wherein a first end of which is electrically connected to the outdoor-unit neutral wire terminal; and
a second diode, wherein an anode of which is electrically connected to a second end of the fourth resistor, and a cathode of which is electrically connected to the first light-emitting end of the seventh optocoupler.

15. The air conditioner according to any one of claims 2 to 14, wherein the connector comprises a first connector, the first connector is arranged in the outdoor unit; a live wire output end of the first connector is electrically connected to the outdoor-unit live wire terminal and the indoor-unit live wire terminal; a neutral wire output end of the first connector is electrically connected to the outdoor-unit neutral wire terminal and the indoor-unit neutral wire terminal; and a communication wire output end of the first connector is electrically connected to the outdoor-unit communication wire terminal and the indoor-unit communication wire terminal.

16. The air conditioner according to any one of claims 2 to 14, wherein the connector comprises:
a first connector which is arranged in the outdoor unit; and
a second connector which is arranged in the indoor unit and electrically connected to the first connector,
wherein a live wire output end of the first connector is electrically connected to the outdoor-unit live wire terminal and is electrically connected to the indoor-unit live wire terminal through the second connector; a neutral wire output end of the first connector is electrically connected to the outdoor-unit neutral wire terminal and is electrically connected to the indoor-unit neutral wire terminal through the second connector; and a communication wire output end of the first connector is electrically connected to the outdoor-unit communication wire terminal and is electrically connected to the indoor-unit communication wire terminal through the second connector.

17. The air conditioner according to any one of claims 2 to 16, wherein the indoor unit further comprises an indoor power conversion component, an input end of the indoor power conversion component is electrically connected to the indoor-unit live wire terminal and the indoor-unit neutral wire terminal, and an output end of the indoor power conversion component is electrically connected to the indoor-unit main control circuit; and the indoor power conversion component is capable of supplying power to the indoor main control circuit.

18. The air conditioner according to any one of claims 2 to 17, wherein the indoor-unit communication circuit further comprises a third diode, a fourth diode, a fifth diode, a sixth diode, a fifth resistor and a sixth resistor; a first end of the fifth resistor is electrically connected to the indoor-unit live wire terminal, and a second end of the fifth resistor is electrically connected to an anode of the third diode; a cathode of the fourth diode is electrically connected to a cathode of the third diode and the first light-receiving end of the second optocoupler, and an anode of the fourth diode is electrically connected to the second light-receiving end of the second optocoupler and the indoor-unit communication wire terminal; a first end of the sixth resistor is electrically connected to the indoor-unit neutral wire terminal, a second end of the sixth resistor is electrically connected to an anode of the fifth diode, a cathode of the fifth diode is electrically connected to the first light-emitting end of the third optocoupler and a cathode of the sixth diode, and an anode of the sixth diode is electrically connected to the second light-emitting end of the third optocoupler and the indoor-unit communication wire terminal.

19. The air conditioner according to any one of claims 2 to 18, wherein the outdoor-unit communication circuit further comprises a seventh diode, an eighth diode, a ninth diode, a tenth diode, and an eleventh diode; a cathode of the seventh diode is electrically connected to the outdoor-unit communication wire terminal and the first light-emitting end of the first optocoupler, and an anode of the seventh diode is electrically connected to an anode of the eighth diode and the second light-emitting end of the first optocoupler; a cathode of the eighth diode is electrically connected to the first light-emitting end of the sixth optocoupler and a cathode of the ninth diode; an anode of the ninth diode is electrically connected to the second light-emitting end of the sixth optocoupler and the outdoor-unit neutral wire terminal; an anode of the tenth diode is electrically connected to an anode of the seventh diode, the second light-emitting end of the first optocoupler, and an anode of the eighth diode; a cathode of the tenth diode is electrically connected to a cathode of the eleventh diode and the first light-receiving end of the fifth optocoupler, and an anode of the eleventh diode is electrically connected to the second light-receiving end of the fifth optocoupler and the outdoor-unit live wire terminal.

20. An air conditioner, comprising:
an indoor-unit main control circuit, capable of controlling an operation of an indoor-unit communication circuit;
the indoor-unit communication circuit, a control end of the indoor-unit communication circuit being electrically connected to a signal transmitting end of the indoor-unit main control circuit;
an outdoor-unit main control circuit, capable of controlling an operation of an outdoor-unit communication circuit; and
the outdoor-unit communication circuit, a control end of the outdoor-unit communication circuit being electrically connected to a signal transmitting end of the outdoor-unit main control circuit; the outdoor-unit communication circuit being electrically connected to the indoor-unit communication circuit;
a first part of the indoor-unit communication circuit and a first part of the outdoor-unit communication circuit constituting a first loop; the signal transmitting end of the indoor-unit main control circuit being capable of sending a first control signal; the first control signal being capable of controlling the first loop to be triggered in conduction during a positive half-cycle of an alternating current (AC) power; the outdoor-unit main control circuit being capable of receiving a first signal transmitted by the first loop; the first signal being capable of controlling an operation of the outdoor unit; and
a second part of the indoor-unit communication circuit and a second part of the outdoor-unit communication circuit constituting a second loop; the signal transmitting end of the outdoor-unit main control circuit being capable of sending a second control signal; the second control signal being capable of controlling the second loop to be triggered in conduction during a negative half-cycle of the AC power; the indoor-unit main control circuit being capable of receiving a second signal transmitted by the second loop; the second signal being capable of controlling an operation of the indoor unit.
